# EUROPEAN PATENT APPLICATION

(11) **EP 2 256 485 A1**
(43) Date of publication of application: **01.12.2010**
(21) Application number: 09161510.4
(22) Date of filing: 29.05.2009
(51) Int. Cl.: G01N 21/76, A23B 7/152

(54) **System for controlling and sensing ethylene concentration in a controlled atmosphere storage and transport environment**

(71) Applicant: Kjærulf Pedersen A/S, 2630 Taastrup (DK)
(72) Inventor: Ehrhorn, Kristian, 5260, Odense S (DK)
(74) Representative: Jensen, Peter Kim

(57) **Abstract**

System for detecting and reducing ethylene (1) in a storage room (2) or a reefer container (2), comprising a sensing reaction chamber (10) and a ethylene/ozone reaction chamber (19) in fluid communication with the storage room (2), in which ozone and air from the storage room (2) is brought into reaction with each other, an ozone generator (6) and light detecting means (8) for detecting light emitted via reaction between the ozone and ethylene, said light detection means producing detection signals (12), processing means (9) and airstream means (4) for forcing an airstream through the system (1). The system (1) is adapted such that ozone excessive from the reaction between the ozone and the ethylene in the sensing reaction chamber (10) with the light detection means (8) is lead into the airstream to the ethylene/ozone reaction chamber (19), and that the ozone generator (6) is controlled by the feedback signal (13).

## Description

### Field of the Invention

The present invention relates to a system for detecting and reducing ethylene in a storage room or a reefer container, the system comprising:
- a sensing reaction chamber and a ethylene/ozone reaction chamber in fluid communication with the storage room, in which ozone and air from the storage room, potentially ethylene containing, is brought into reaction with each other,
- a ozone generator for supplying ozone into the sensing reaction chamber and the ethylene/ozone reaction chamber,
- light detecting means for detecting light emitted via reaction between the ozone and ethylene, said light detection means producing detection signals,
- processing means for processing the signals from the light detection means and producing feedback signals,
- airstream means for forcing an airstream from the storage room or reefer container through the system.

Furthermore the invention relates to a method for detecting and reducing ethylene in a storage room.

### Background art

Ethylene concentrations more than 1 ppmv (part per million volume) may have an adverse influence on the freshness and stock life time of perishable produce like fruit, vegetables as well as flowers and living plants, and the produce emit ethylene when it mature, which may influence other produce in the vicinity leading to decay and reduced stock life. Therefore there is a demand for systems which effectively and economically profitable, can control and reduce or remove ethylene in produce stocks and transport containers equipped with cooling machines and similar devices in order to control the internal atmosphere. Known methods of ethylene removal are ventilation, scrubbing in potassium permanganate scrubbers, or chemical reaction with ozone. Adequate ventilation may be unacceptable, because it influences the other control parameters of the controlled atmosphere and will increase energy consumption in cooled and temperature controlled environments. Scrubbing with potassium permanganate is taking up space and needs service and renewal of the used potassium permanganate.

Whatever method used for ethylene removal, the need for measuring or indicating the actual ethylene level is mandatory in order to make a closed loop controlled process, which is the best way to optimize and control the ethylene removal process.

Several methods for sensing ethylene are known, but all known methods sensitive enough for measuring concentrations below 1 ppm as needed for effective control of produce atmosphere, are unfortunately too expensive and/or otherwise unsuited for this purpose and the rugged environment found in reefer containers.

It is an aspect of the invention to obtain a system that can control the atmosphere for produce storage and transport, with respect to ethylene concentration control, that to a wholly or partly overcome the above disadvantages and drawbacks of the prior art.

A further aspect is to provide an ethylene removal system, combined with an ethylene measuring and controlling system, which may be used in produce storage and transport systems and similar environments.

These aspects are obtained by a system adapted such that ozone excessive from the reaction between the ozone and the ethylene in the sensing reaction chamber with the light detection means is lead into the airstream to the ethylene/ozone reaction chamber, and that the ozone generator is controlled by the feedback signal.

In this way it is achieved that the ozone generated by the ozone generator is used for determining the level of ethylene by means of detecting the light emitted from the reaction between ozone and ethylene in the sensing reaction chamber and that the ozone generated by the ozone generator furthermore is used for reducing the concentration of ethylene in the air in the container. This facilitates that the system can be so compact and robust, that it can be used in reefer containers/ cooling containers for ship and land transport.

The method for ethylene C₂H₄ detection seems to be very useful in this special case, where ozone O₃ generation is implemented for ethylene removal. This sensing method uses the known phenomena, that when ozone and ethylene reacts with this chemical reaction, 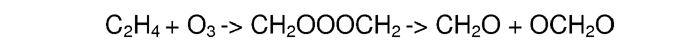 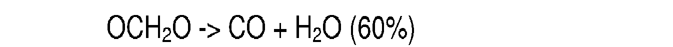 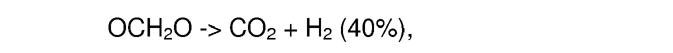 fluorescence or chemiluminescence is emitted. The fluorescence may be detected with a light-sensitive photo multiplier tube or avalanche photo diode or similar. This ozone dependent sensing method, combined with the ozone produced by a dedicated ozone generator, also needed and used to produce ozone for ethylene removal, gives synergy in an optimal solution to both ethylene removal and sensing as well.

The mineralization of ethylene and the secondary breakdown product formaldehyde may be further facilitated by implementing a protocatalytic reactor of the prior art.

The use of bandgab semiconductors such as TiO₂, ZnO, ZrO₂, CdS, etc. and their various modified forms as photocatalysts is well known in the prior art. For example TiO₂ in the anastase crystalline form in particular are readily exited upon exposure to near UV radiation (wavelengths below approximately 400 nm) producing electron/hole (e⁻/h⁺) pairs on the semiconductor surface. The recombination of e⁻/h⁺ pairs has the resulting effect of reducing the process quantum efficiency. The recombination can occur either between the energy bands or on the semiconductor surface. TiO₂ has a bandgab energy of 3.1 eV.

It has long been recognized that certain materials such as noble metals (e.g. Pt, Pd, Au and Ag) and some metal oxides (e.g. RuO₂, WO₃, and SiO₂) facilitate electron transfer and prolong the length of time electrons and holes remain segregated. The electrons and holes act as strong reducing and oxidizing agents that cause breakdown of the target compounds (ethylene, formaldehyde and ozone etc.) via formation of active radicals on the photocatalyst surface. The photocatalytic process is dependent on water i.e. from the humidity in the air.

This atmosphere in the storage room may also be controlled with respect to one or more parameters like temperature, humidity, CO2 and O2.

In a further embodiment the ozone generator may be turned off when the concentration of ethylene reaches a threshold value. Likewise, in a further embodiment according to the invention the production of ozone from the ozone generator may be reduced when the concentration of ethylene reaches a threshold value. In an embodiment according to the invention the ozone generator is turned on again after a definable period of time after having been turned off.

In a further embodiment the airstream means may be turned off when the concentration of ethylene reaches a threshold value. In one embodiment the threshold value may be 0.1 -1 ppm. A threshold value of below 1 ppm ensures that the degeneration of the produce is kept to a minimum. In yet a further embodiment according to the invention airstream through the system may be reduced when the concentration ethylene reaches a threshold value. In an embodiment according to the invention the airstream is increased after a definable period of time after having been turned off or reduced.

According to the invention the system may further comprise a venturi for supplying ozone from the ozone generator into the airstream to the ethylene/ozone reactor chamber.

In a further embodiment the ethylene/ozone reactor chamber may comprise a labyrinth for stimulating reactions with ozone and ethylene.

According to the invention the labyrinth may comprise a number of channels being open in the one end and closed in the other end so as to achieve that the airstream is directed through a wall of a channel in order for the airstream to pass through the labyrinth.

According to a further embodiment of the invention the ethylene/ozone reaction chamber may comprise an inner surface made of synthetic fibres, plastic, metal, porous ceramic or sintered material.

According to yet a further embodiment of the invention the ethylene/ozone reaction chamber material synthetic fibres, plastic, metal, porous ceramic or sintered material may be coated with a catalytic material. In this way the ozone/ ethylene reaction is enhanced.

According to a further embodiment of the invention the system may further comprise a photocatalytic reaction chamber comprising an inner surface coated with the photocatalytic material Ti02 and a UV light source for activating the catalytic reaction.

The use of bandgab semiconductors such as TiO₂, ZnO, ZrO₂, CdS, etc. and their various modified forms as photocatalysts is well known in the prior art. For example TiO₂ in the anastase crystalline form in particular are readily exited upon exposure to near UV radiation (wavelengths below approximately 400 nm) producing electron/hole (e⁻/h⁺) pairs on the semiconductor surface. The recombination of e⁻/h⁺ pairs has the resulting effect of reducing the process quantum efficiency. The recombination can occur either between the energy bands or on the semiconductor surface. TiO₂ has a bandgab energy of 3.1 eV.

According to a further embodiment of the invention, the system may further comprise an ozone scrubber reaction chamber, in which ozone is regenerated to oxygen by catalytic influence of MnO₂ and said ozone scrubber reaction chamber is positioned after the ethylene/ozone reaction chamber and the photocatalytic reaction chamber.

According to yet a further embodiment of the invention, an ozone scrubber reaction chamber, positioned last in series with the ethylene/ozone reaction chamber and the photocatalytic reaction chamber, in which ozone is regenerated to oxygen by catalytic influence of MnO₂.

The invention further relates to a method for detecting and reducing the level of ethylene in a storage room, comprising the steps of:
- providing an airstream from the storage room to an ozone generator,
- obtaining ozone from said ozone generator,
- mixing the ozone with air from the storage room potentially containing ethylene in the sensing reaction chamber and the ethylene/ozone reaction chamber,
- detecting light emitted by the reaction between the ozone and the ethylene in order to determine the level of ethylene in the air and producing detection signals according to the detected light,
- processing the detection signals in order to produce feedback signals to control the ozone generator, and leading excess ozone generated by the ozone generator into the airstream to the ethylene/ozone reaction chamber.

According to another embodiment of the invention the method may further comprise the step of:
- adjusting the amount of ozone produced by the ozone generator if the concentration of ethylene is reduced to a level below 0.1-1 ppm.

According to yet another embodiment of the invention the method may further comprise the step of:
- reducing the level of ethylene using a photocatalytic process in a photoatalytic reaction chamber with Ti02 as photocatalyst and an UV light source to energize the photocatalyzed chemical reactions.

According to the invention, the system might comprise a timer in order to start up the system after the ozone generator has been turned off.

According to an embodiment of the invention the UV light source (32) may be turned off when the concentration of ethylene reaches a threshold value.

According to another embodiment of the invention the method may further comprise the step of:
- reducing the level of ozone in an ozone scrubber reaction chamber, in which ozone is regenerated to oxygen by catalytic influence of MnO₂ and said ozone scrubber reaction chamber is positioned in the airstream after the ethylene/ozone reaction chamber and the photocatalytic reaction chamber.

In a further embodiment according to the invention, the photocatalytic reaction chamber and the ozone scrubber reaction chamber may be integrated into one unit.

According to the invention, the control system for ethylene removal is characterized by the use of ozone, to react with and thereby breaking down and remove the ethylene and using the fluorescence occurring from this chemical process to detect the ethylene concentration. As the ethylene concentration changes, the intensity of the fluorescence is changing accordingly. The emitted light from the fluorescence is detected by a photomultiplier or similar very light-sensitive semiconductor sensor like an avalanche photo diode. The raw detected signal from the sensor is connected to an electronic signal processing circuit and the resulting output controls the ozone generator and the resulting ozone supply, in order to reduce the ethylene concentration to a desired level. An optical filter may be placed between the sensor and the fluorescence in the mixing chamber. This filter passes the light, in order to remove light with other wavelengths than the wavelength emitted from the ethylene/ozone reaction fluorescence signals and blocks light from other chemical reactions with ozone than ethylene, i.e. 03 + NO => 2 NO2 + fluorescence. The filtering effect depends on process specific radiation of light of characteristic wavelengths for each type of chemical reaction.

According to the invention, an electrical air pump or a fan may blow or suck the air from the storage room through the ozone generator and through the sensing reaction chamber, where the chemical reaction starts and fluorescence is detected.

According to the invention, a changeable and disposable air-filter made of porous material like paper or fabric, commonly implemented for particle filtration of air, may be placed inline the airstream before the , the reaction chambers and the ozone generator. The purpose of the air filter is to avoid contamination of the internal surfaces in the various system modules exposed to the internal air in the storage and transport container environment.

According to the invention, a ethylene/ozone reaction chamber with a mixing labyrinth may optionally be inserted in the air flow after ozone is added, in order to improve the reaction efficiency, before the air flow is returned to the storage room or container. This reactor may be made of porous ceramic or sintered material with many parallel air channels as known from catalytic converters and exhaust filters for diesel particles. In a special construction, every channel is closed in one end and open in the other end and arranged in a pattern which is forcing the gas flow through the porous wall from the channels open on the input side into the adjacent channels with output on the output side in the other end. Coating of the porous material with catalytic material may also accelerate the chemical reaction. The catalytic coated surface of the reactor intensify the fluorescence on its surface visible from the photo detector and increase the signal to noise ratio of this.

According to the invention an ozone scrubber reaction chamber for ozone to oxygen regeneration may be inserted in the air flow path after the ethylene/ozone reaction chamber, in order to remove excess residual ozone from the airstream before it returns to the produce storage room through a return pipe. This third reaction chamber may be constructed by the same method as the above mentioned ethylene reactor.

According to the invention a venturi device may improve oxygen and ethylene gas mixing and provide an appropriate air flow through the ozone generator, caused by the pressure drop in the venturi. The ozone enriched airstream from the ozone generator flows through a tube and a nozzle and is discharged inside the venturi, where it is mixed with the ethylene-containing main airstream from the storage room. Mixing of the two gas streams facilitates the chemical reaction between ethylene and ozone and fluorescence occurs.

According to the invention a photocatalytic reaction chamber with photocatalytic reacting surface like TiO₂ and an ultra violet light source to activate the photocatalytic effect of the TiO₂ may be applied in the main airstream of the system in order to decompose and remove ethylene. Furthermore, formaldehyde and other organic gasses are removed.

The term "storage room" is to be understood in the broadest sense as equipment or structures where produce is stored and/or transported such as containers, reefer containers or similar.

Excess ozone is to be understood as ozone produced by the ozone generator that is in excess from what is needed to carry out the detection of ethylene in the means for light detection.

### Brief description of the drawings

The invention and its many advantages will be described in more detail below, with reference to the accompanying schematic drawings, which for the purpose of illustration show some non-limiting embodiments and in which
- Fig. 1: shows schematically a storage room connected to a system accord- ing to the invention.
- Fig. 2: shows schematically a storage room connected to a system with some additional embodiments added according to the invention.
- Fig. 3: shows schematically a system according to the invention, where more details of the practical construction is shown.

All the figures are highly schematic and not necessary to scale, and they show only parts which are necessary in order to elucidate the invention, other parts being omitted or merely suggested.

### Detailed description of the drawings

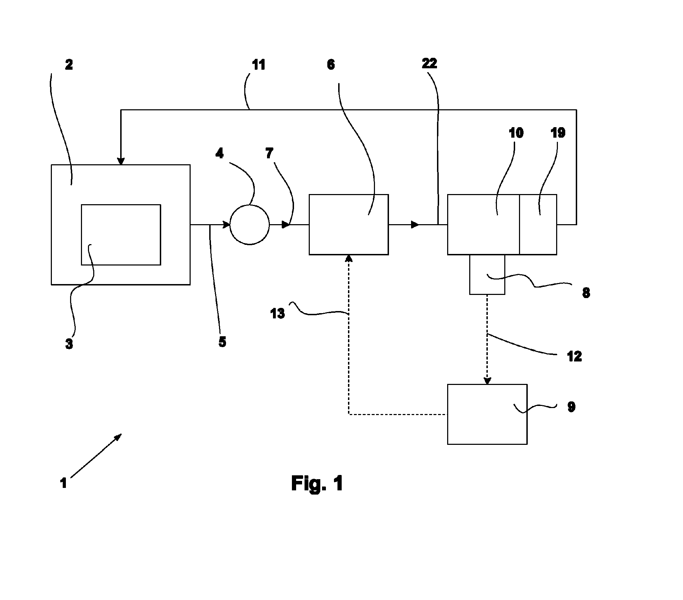

In Fig. 1 a system 1 according to the invention is shown schematically. The transport container (2) or storage room 2 is shown with its content of produce 3 which may emit ethylene. The storage room 2 is connected with a duct 5 to the airstream means, e.g. an air pump or fan 4 via the duct 7 to the input of an ozone generator 6 and the output duct 22 from the ozone generator 6 leads the ozone enriched airstream into a sensor reaction chamber 10 where a light sensitive photomultiplier or similar avalanche photo diode sensor used as light detection means 8 is detecting the fluorescence from the chemical reaction from ozone reacting with ethylene inside the sensing reaction chamber 10 and further through the ethylene/ozone reaction chamber (19) where the chemical reaction continues until the ethylene reduced air flows back to the storage room 2 through the return duct 11. Detection signals from the light detected by the light detection means 8 is send to the processing means 9 in order for the processing means 9 to send a feedback signal 13 to the ozone generator 6.

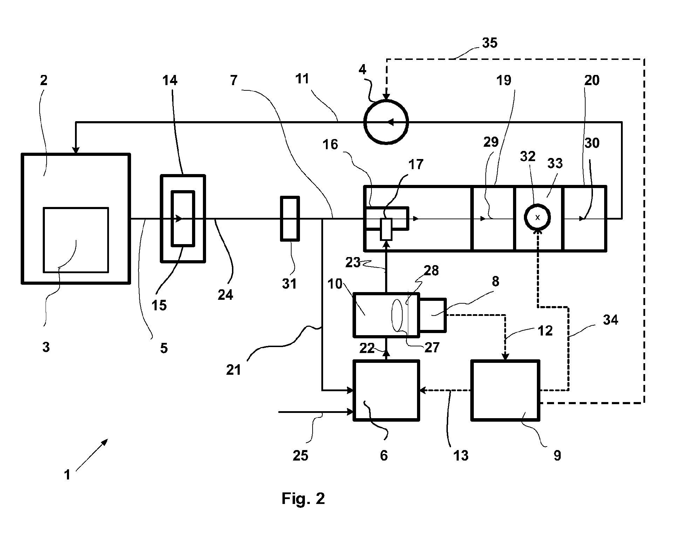

In Fig. 2 a replaceable air filter 15 is positioned inside a filter case 14 with an output duct 24 connected to a heater 31 which has the purpose of heating the air to avoid condensation of water vapor in the system. From the heater the airstream is split in two separate streams, the one goes via the duct 21 through the ozone generator 6 and via the duct 22 into the sensing reaction chamber 10. In the sensing reaction chamber 10 the fluorescence from the reaction with ozone and ethylene is detected by the light detection means 8 which may be improved by the optical filter 28 and the lens 27. After the sensing reaction chamber 10 the duct 23 is leading to the nozzle 17 through which it discharges into the venturi 16 where it is rejoined and mixed with the main air stream from the duct 7. The measurement signal 12 from the light detection means 8 is treated in the signal processing means 9 and the output signal 13, is controlling the ozone generator 6, the signal 34 is controlling the UV light source 32 and the signal 35 is controlling the fan 4. An optical filter 28 may selectively pass fluorescence from the ethylene/ozone chemical reaction. The focusing lens 27 is increasing the sensitivity, by focusing the fluorescent light on the light sensitive part of the light detection means 8. From the venturi 16 the gas is lead to the ethylene/ozone reaction chamber 19 where the chemical reaction continues while it flows into the photocatalytic reaction chamber 33 with the UV light source 32. An ozone scrubber reaction chamber 20 converts the residual ozone to oxygen before the ethylene and ozone stripped airstream is returned to the storage room 2 via the fan 4 and through the duct 11. An alternative fresh air supply 25 may be needed to supply fresh ambient air to the ozone generator (6) in cases where the oxygen concentration in the storage room 2 is low. The electrically powered heater 31 positioned in the airstream before the venturi 16 and before the input 21 to the ozone generator 6 has the function of heating the air in order to avoid moisture and wet surfaces inside the system.

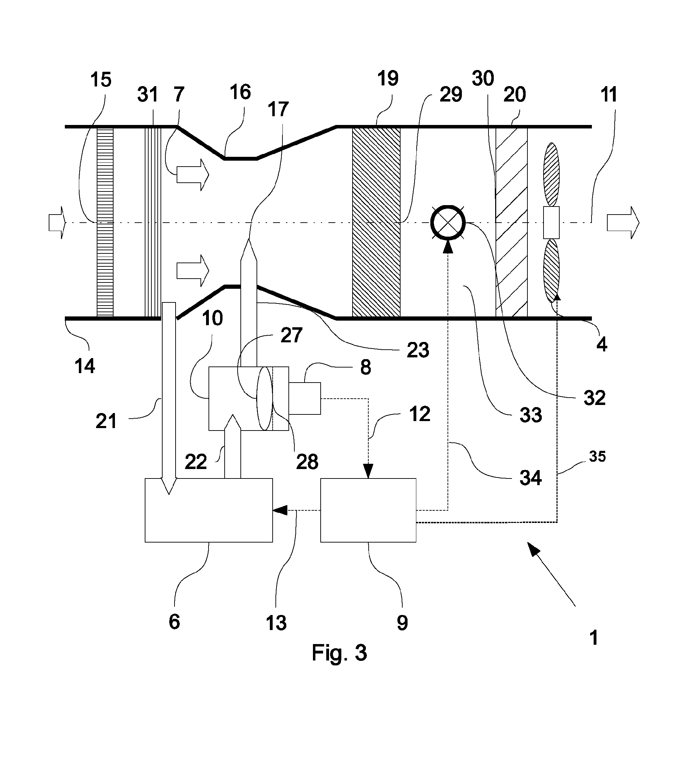

In Fig. 3 an embodiment of the system 1 is shown schematically. In fig. 3 a labyrinth ceramic or sintered reactor material 29 has the purpose of increasing the speed and efficiency of the chemical reaction between the ethylene and ozone in the ethylene/ozone reaction chamber 19. A similar labyrinth of ceramic or sintered reactor material 30 have the purpose of increasing the speed and efficiency of destroying excess ozone to oxygen in the ozone scrubber reaction chamber 20. A coating of the exposed internal surfaces of the reaction chambers 19, 33, 20 with appropriate catalysts increases the reaction speed and efficiency by a catalytic effect. The photocatalytic reaction chamber 33 has the boundaries of 29 and 30 which may be coated with TiO₂ in order to create a large surface of photochatalytic capacity irradiated by the UV light source 32. The UV light source 32 may also be controlled by the control signal 34 from the signal processing means 9. The ozone scrubber reaction chamber 20 has surfaces coated with a catalyst such as MnO₂ for conversion of residual ozone to oxygen.

Although the invention above has been described in connection with preferred embodiments of the invention, it will be evident for a person skilled in the art that several modifications are conceivable without departing from the invention as defined by the following claims.

## Claims

1. System for detecting and reducing ethylene (1) in a storage room (2) or a reefer container (2), the system (1) comprising:
- a sensing reaction chamber (10) and a ethylene/ozone reaction chamber (19) in fluid communication with the storage room (2), in which ozone and air from the storage room (2), potentially ethylene containing, is brought into reaction with each other,
- a ozone generator (6) for supplying ozone into the sensing reaction chamber (10) and the ethylene/ozone reaction chamber (19),
- light detecting means (8) for detecting light emitted via reaction between the ozone and ethylene, said light detection means producing detection signals (12),
- processing means (9) for processing the signals (12) from the light detection means and producing feedback signals (13, 34, 35),
- airstream means (4) for forcing an airstream from the storage room (2) or reefer container (2) through the system (1),
**characterised in that**, the system (1) is adapted such that ozone excessive from the reaction between the ozone and the ethylene in the sensing reaction chamber (10) with the light detection means (8) is lead into the airstream to the ethylene/ozone reaction chamber (19), and that the ozone generator (6) is controlled by the feedback signal (13).

2. System for detecting and reducing ethylene (1) according to claim 1, **wherein** the ozone generator (6) is turned off when the concentration of ethylene reaches a threshold value.

3. System for detecting and reducing ethylene (1) according to claim 1 or 2, **wherein** the airstream means (4) is turned off when the concentration of ethylene reaches a threshold value and is turned on again after a definable period of time.

4. System for detecting and reducing ethylene (1) according to any of the claims 1, 2, or 3 **wherein** the threshold value is 0.1 -1 ppm.

5. System for detecting and reducing ethylene (1) according to any of the claims 1 - 4, **wherein** the system further comprises a venturi (16) for supplying ozone from the ozone generator(6) via the sensing reaction chamber (10) into the airstream to the ethylene/ozone reaction chamber (19).

6. System for detecting and reducing ethylene (1) according to any of the claims 1 - 5, **wherein** the ethylene/ozone reaction chamber (19) comprises a labyrinth (29) for stimulating reactions with ozone and ethylene.

7. System for detecting and reducing ethylene (1) according to claim 7, **wherein** the labyrinth (29) comprises a number of channels being open in the one end and closed in the other end so as to achieve that the airstream is directed through a wall of a channel in order for the airstream to pass through the labyrinth (29).

8. System for detecting and reducing ethylene (1) according to any of claims 1 - 7, **wherein** the ethylene/ozone reaction chamber (19) comprises an inner surface made from synthetic fibres, plastic, metal, porous ceramic or sintered material or a combination of these.

9. System for detecting and reducing ethylene (1) according to claim 8, **wherein** the synthetic fibres, plastic, metal, porous ceramic or sintered material (29) is coated with a catalytic material.

10. System for detecting and reducing ethylene (1) according to claim 1 - 9, **wherein** the system further comprises a photocatalytic reaction chamber (33) comprising an inner surface (29, 30) coated with a photocatalytic material and comprising a UV light source (32).

11. System for detecting and reducing ethylene (1) according to claim 10, **wherein** the photocatalytic material of the photocatalytic reaction chamber (33) is TiO_{2.}.

12. System for detecting and reducing ethylene (1) according to claim 10-11, **wherein** the UV light source (32) is turned off when the concentration of ethylene reaches a threshold value.

13. System for detecting and reducing ethylene (1) according to claim 1 - 12, **wherein,** the system further comprises an ozone scrubber reaction chamber (20), in which ozone is regenerated to oxygen by catalytic influence of MnO₂ and said ozone scrubber reaction chamber (20) is positioned after the ethylene/ozone reaction chamber (19).

14. Method for detecting and reducing the level of ethylene in a storage room (2), comprising the steps of:
- providing an airstream from the storage room to an ozone generator (6),
- obtaining ozone from said ozone generator (6),
- mixing the ozone with air from the storage room (2) potentially containing ethylene in a sensing reaction chamber (10),
- detecting light emitted by the reaction between the ozone and the ethylene by the light detection means (8) in order to determine the level of ethylene in the air and producing detection signals (12) according to the detected light,
- processing the detection signals (12) in order to produce feedback signals (13) to control the ozone generator (6), and leading excess ozone generated by the ozone generator (6) via the sensing reaction chamber (10) into the airstream to the ethylene/ozone reactor chamber (19).

15. The method according to claim 14 wherein the method further comprises the step of:
- adjusting the amount of ozone produced by the ozone generator (6) if the concentration of ethylene is reduced to a level below 0.1-1 ppm.

16. The method according to claim 14 or 15 wherein the method further comprises the step of:
- reducing the level of ethylene using a photocatalytic process in a photocatalytic reaction chamber (33).

17. The method according to claim 14 - 16 wherein the method further comprises the step of:
- reducing the level of ozone in an ozone scrubber reaction chamber (20) positioned as the final reaction chamber in the airstream returning to the storage room (2).
